# DEMANDE DE BREVET EUROPEEN

(11) **EP 2 777 967 A2**
(43) Date de publication de la demande: **17.09.2014**
(21) Numéro de dépôt: 14447002.8
(22) Date de dépôt: 04.02.2014
(51) Int. Cl.: B60J 11/08

(54) **Ecran pour le remplacement temporaire d'un vitrage d'un véhicule**

(30) Priorité: 06.02.2013 BE 201300073
(71) Demandeur: Schmits, Jacques, 5332 Crupet (BE)
(72) Inventeur: Schmits, Jacques, 5332 Crupet (BE)

(57) **Abrégé**

Ecran pour le remplacement temporaire d'un vitrage d'une portière d'un véhicule, comprenant une enveloppe (1) pouvant être enfilée sur le cadre de la portière (11) et comprenant deux feuilles souples (2, 3) qui sont accolées et scellées à leur périphérie, à l'exception de leur bord inférieur (4), ménageant ainsi une ouverture (7) qui s'étend sur une partie (5) du bord antérieur (6) des feuilles.

## Description

### Domaine de l'invention

L'invention se rapporte aux vitrages des véhicules, spécialement aux vitrages des véhicules automobiles tels que les voitures de tourisme et les véhicules utilitaires.

Elle concerne spécifiquement un écran de protection destiné à être substitué à titre temporaire à un vitrage brisé d'un véhicule, dans l'attente du remplacement de celui-ci.

### Etat de la technique

Il est courant qu'un véhicule automobile, spécialement une voiture de tourisme, subisse un bris de vitrage, par exemple lors d'un acte de vandalisme ou sous l'effet de la projection d'un gravillon. La plupart du temps, ces bris de vitrage sont inattendus et il est nécessaire de prendre immédiatement des mesures provisoires de sauvegarde pour protéger l'habitacle du véhicule et ses occupants contre les intempéries, en attendant la mise en place d'un nouveau vitrage. Un moyen de sauvegarde provisoire communément utilisé consiste à recouvrir l'ouverture laissée par la disparition du vitrage par une feuille translucide souple et imperméable que l'on colle sur la carrosserie du véhicule au moyen de rubans adhésifs tels que ceux connus sous la marque SCOTCH^{®}. Ce moyen, apparenté à du bricolage, s'avère difficile à mettre en oeuvre correctement et peu efficace. On a dès lors cherché à fournir des écrans de protection préfabriqués, spécialement adaptés aux portières des véhicules.

Dans le document US-6869127B2, on décrit un écran de protection pour le remplacement temporaire du vitrage d'une portière avant d'une voiture automobile. Cet écran connu comprend une enveloppe, dont les dimensions sont adaptées pour qu'elle puisse être enfilée sur la cadre de la portière et reposer sur celui-ci. Cette enveloppe est formée d'une paire de feuilles souples et transparentes, qui sont accolées et scellées à leur périphérie, tout en ménageant une ouverture le long de leur bord inférieur pour permettre d'enfiler l'enveloppe sur le cadre de la portière. Les deux feuilles ont le même profil que le cadre du vitrage de la portière et l'une d'elles est percée d'une fente latérale verticale pour permettre le passage du rétroviseur extérieur de la voiture. Des rubans adhésifs permettent une fixation temporaire des feuilles sur la carrosserie et sur l'habillage intérieur de la portière.

Cet écran connu présente plusieurs désavantages.

Un premier désavantage de cet écran connu est qu'il n'est pas d'usage universel. En effet, puisque l'enveloppe doit avoir le même profil que le cadre de la portière du véhicule, elle est adaptée à un modèle de véhicule bien défini et ne peut pas convenir pour d'autres modèles de véhicules.

En outre la fente destinée au rétroviseur d'une portière avant doit être parfaitement positionnée et dimensionnée en fonction de la position du rétroviseur, ce qui complique la fabrication de l'écran. Cette complication est amplifiée du fait que la position du rétroviseur extérieur diffère selon le modèle du véhicule. En outre, une enveloppe conçue pour une portière avant droite n'est pas utilisable sur une portière avant gauche, ni sur une portière arrière.

Ces particularités désavantageuses de l'écran connu décrit plus haut rendent une fabrication en grande série difficile, voire impossible, ce qui grève considérablement le coût de la fabrication et limite sa disponibilité sur le marché.

### Résumé de l'invention

L'invention vise à remédier aux désavantages précités des moyens de protection provisoire connus.

L'invention vise notamment à fournir un moyen de protection provisoire dont la mise en place sur la portière d'un véhicule ne nécessite plus un bricolage improvisé.

L'invention vise spécialement à fournir un écran de protection qui puisse être préfabriqué et dont la mise en place sur la portière d'un véhicule soit rapide, facile et ne nécessite pas un travail de bricolage improvisé. L'invention vise tout spécialement à fournir un écran de protection de ce type, dont l'utilisation est universelle, convenant pour toutes les portières du véhicule et quel que soit le modèle de celui-ci, cet écran de protection pouvant de la sorte être fabriqué en grande série, à prix modéré.

En conséquence, l'invention concerne un écran pour le remplacement temporaire d'un vitrage d'une portière d'un véhicule, ledit écran comprenant une enveloppe pouvant être enfilée sur le cadre de la portière et comprenant deux feuilles souples qui sont accolées et scellées à leur périphérie, le long de leurs bords respectifs antérieurs, postérieurs et supérieurs, et qui délimitent une ouverture le long de leurs bords respectifs inférieurs ; selon l'invention, l'ouverture susdite s'étend sur la totalité du bord inférieur des feuilles et sur une partie du bord antérieur des feuilles.

### Description détaillée de l'invention

Dans le présent mémoire, la définition des vocables « antérieur », « postérieur », « supérieur » et « inférieur » présuppose que l'enveloppe est positionnée sur le cadre d'une portière avant du véhicule. Le bord supérieur de l'enveloppe est alors celui qui repose sur la partie supérieure du cadre et le bord inférieur est le bord opposé au bord supérieur. Le bord antérieur et le bord postérieur de l'enveloppe sont alors définis par le sens de progression normal du véhicule (le bord antérieur étant le bord dirigé vers l'avant du véhicule et le bord postérieur étant le bord dirigé vers l'arrière du véhicule.

Selon l'invention, on met en oeuvre une enveloppe dont les dimensions sont au moins égales (voire supérieures) à celles des cadres les plus grands des portières des véhicules les plus communément utilisés. La forme de l'enveloppe et des feuilles qui la constituent n'est pas critique pour la définition de l'invention. On préfère que l'enveloppe et les feuilles aient la forme d'un quadrilatère, par exemple celle d'un trapèze, d'un parallélogramme ou d'un rectangle. Les enveloppes et les feuilles rectangulaires sont spécialement recommandées.

Les feuilles souples de l'enveloppe sont avantageusement translucides, de préférence transparentes. Elles doivent être imperméables au vent et à l'eau et résister à l'action du vent et de la pluie lors d'une utilisation normale du véhicule à vitesse modérée (allure de sauvegarde ou de détresse). Nonobstant ces conditions, la matière constitutive des feuilles n'est pas critique pour la définition de l'invention. On les réalise généralement en un (co)polymère de synthèse souple, avantageusement en (co)polymère dérivé du chlorure de vinyle ou d'une oléfine. Le polychlorure de vinyle souple, le polyéthylène souple et le polypropylène souple ont la préférence (liste exemplative, non exhaustive).

Le scellement des feuilles sur leur périphérie doit être étanche à l'air et à l'eau. On peut à cet effet les coller ou les souder.

Les feuilles ne sont pas scellées le long de leur bord inférieur, de manière à ménager une ouverture par laquelle l'enveloppe puisse être enfilée sur le cadre d'une portière du véhicule. Conformément à l'invention, cette ouverture se prolonge sur une partie du bord antérieur des feuilles. Cette prolongation de l'ouverture est destinée à permettre l'application de l'enveloppe sur une portière équipée d'un rétroviseur latéral extérieur, comme le cas se présente habituellement sur les portières avant des voitures automobiles. L'ouverture ménagée sur le bord antérieur de l'enveloppe a alors pour fonction de permettre le passage du rétroviseur latéral extérieur. La prolongation de l'ouverture sur le bord antérieur de l'enveloppe doit par conséquent avoir une longueur au moins égale à la hauteur du rétroviseur latéral extérieur. Etant donné que la position des rétroviseurs extérieurs peut varier selon le modèle du véhicule, la longueur de cette prolongation antérieure de l'ouverture doit être calculée pour que l'enveloppe soit d'usage universel, pouvant s'adapter à la majorité des véhicules du parc automobile. Il faut toutefois éviter que cette prolongation antérieure de l'ouverture ait une longueur excessive, car cela nuirait à la fixation et au maintien de l'enveloppe sur le cadre de la portière. La longueur optimum va dès lors être le résultat d'un compromis que l'homme du métier doit déterminer par un examen approprié du parc automobile. En pratique on obtient de bons résultats lorsque le rapport entre la longueur de la partie antérieure de l'ouverture et la longueur totale du bord antérieur de l'enveloppe est compris entre 0,15 et 0,80, les valeurs de 0,25 à 0,50 étant préférées.

Pour fixer l'enveloppe sur le cadre de la portière, les feuilles sont munies d'éléments adhésifs sur leur face située à l'intérieur de l'enveloppe, le long de l'ouverture. Ces éléments adhésifs doivent être choisis judicieusement pour assurer une obturation étanche de la portière et résister aux intempéries lorsque le véhicule circule à vitesse modérée et ils doivent être prévus à la fois le long du bord inférieur et le long du bord antérieur de l'enveloppe. Nonobstant cette condition, le choix des éléments adhésifs n'est pas critique pour la définition de l'invention.

Selon une forme de réalisation préférée de l'invention, les éléments adhésifs comprennent des rubans adhésifs longitudinaux continus. Dans cette forme de réalisation, les rubans adhésifs s'étendent sur la totalité du bord de l'ouverture (bord inférieur et bord antérieur). Ils sont avantageusement recouverts d'un film protecteur siliconé.

Après avoir enfilé la poche selon l'invention sur le cadre d'une portière, il est souhaitable de replier les parties qui dépassent le cadre, pour envelopper convenablement celui-ci. À cet effet, dans une autre forme de réalisation particulière de l'invention, la poche est munie, le long du bord antérieur et/ou du bord postérieur des feuilles, de pattes souples portant des éléments adhésifs. Ces pattes et leurs éléments adhésifs servent alors à fixer les parties repliées de la poche. Les pattes peuvent être des prolongements latéraux d'une des feuilles ou être rapportées et fixées sur celle-ci (par exemple collées ou soudées). Les pattes peuvent porter des éléments adhésifs sur leurs deux faces. Mais, en général, il est suffisant que les éléments adhésifs soient présents sur une seule face des pattes, étant donné que celles-ci sont souples.

Dans une autre forme de réalisation particulière de l'invention, la poche comprend un moyen auxiliaire pour fixer temporairement les feuilles l'une à l'autre, entre leur bord supérieur et l'élément adhésif de leur bord inférieur. Ce moyen de fixation temporaire est destiné à éviter que les feuilles soient le siège de battement sous l'effet du vent pendant que le véhicule circule. Pour remplir correctement cette fonction, le moyen auxiliaire de fixation temporaire est avantageusement localisé à une distance du bord inférieur des feuilles, comprise entre 15 et 85 % de l'écart entre les bords inférieur et supérieur des feuilles. Idéalement, cette distance est de 25 à 75 % dudit écart. Dans cette forme de réalisation de l'invention, le moyen de fixation temporaire comprend avantageusement des éléments adhésifs solidaires d'une au moins des deux feuilles. La forme et la constitution de ces éléments adhésifs ne sont pas critiques pour la définition de l'invention. Ils peuvent par exemple être des plots circulaires ou polygonaux (par exemple carrés) répartis uniformément à la surface des feuilles. Dans un mode de réalisation préféré, ces éléments adhésifs consistent en un ou plusieurs rubans adhésifs, solidaires d'une des feuilles. Ces rubans adhésifs sont avantageusement des rubans longitudinaux, bien que des rubans verticaux ou obliques puissent également convenir. Par définition, un ruban longitudinal est un ruban qui est dirigé dans le sens normal de progression du véhicule, lorsque la poche est positionnée sur le cadre de la portière.
Les éléments adhésifs sont avantageusement recouverts d'un film de protection siliconé.

L'écran selon l'invention convient pour tous les véhicules équipés de portières munies d'un vitrage, tels que les voitures de chemin de fer, les véhicules routiers pour le transport de personnes ou de marchandises (autobus, autocars, camions, voitures particulières), les bateaux maritimes et fluviaux, les yachts (liste exemplative, non exhaustive). Il trouve une application toute particulière pour les portières latérales des voitures automobiles. Par définition, les portières latérales d'une voiture automobile sont les portières situées le long des flancs de la voiture, par opposition au pare-brise et à la lunette arrière de la voiture. L'écran selon l'invention est tout spécialement destiné aux voitures de tourisme, dont une au moins des portières avant est équipée d'un rétroviseur extérieur.

Des particularités et détails de l'invention vont apparaître au cours de la description suivante des figures annexées, qui sont des schémas de quelques formes de réalisation particulières de l'invention.

### Brève description des figures

La figure 1 montre schématiquement une forme de réalisation particulière de l'écran selon l'invention ;
La figure 2 montre la mise en place de l'écran de la figure 1 sur une portière avant d'une voiture automobile ;
La figure 3 est une coupe selon le plan III-III de la figure 2 ;
La figure 4 est une vue de face de la portière de la figure 2 (dans le sens de la flèche X de la figure 2) ;
La figure 5 est une variante de l'écran de la figure 1 ; et
La figure 6 est une coupe transversale selon le plan VI-VI de la figure 5.
Les figures ne sont pas dessinées à l'échelle.

Généralement, les mêmes numéros de référence désignent les mêmes éléments.

### Description détaillée de modes de réalisation particuliers

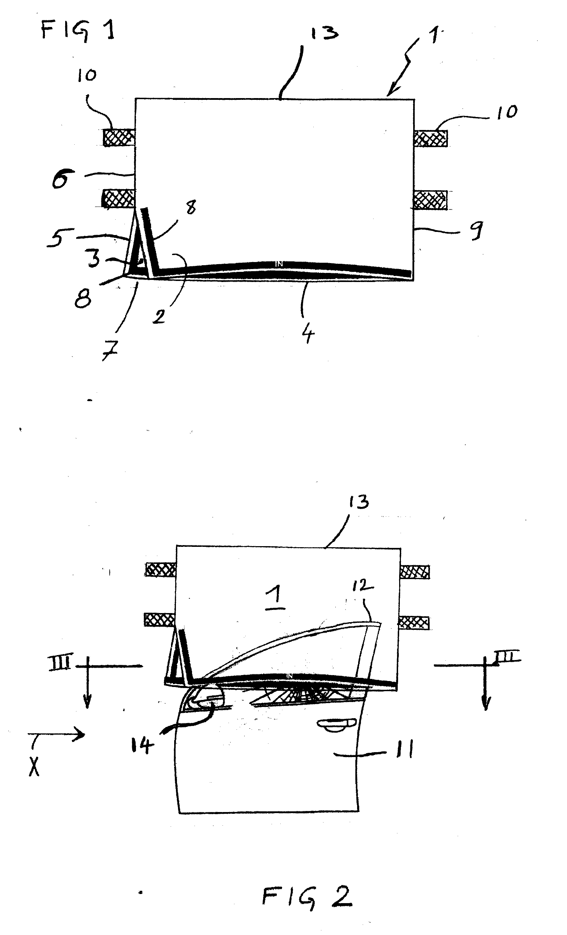

L'écran représenté à la figure 1 comprend une poche 1, formée par la juxtaposition de deux feuilles rectangulaires identiques 2 et 3. Les deux feuilles 2 et 3 sont en polychlorure de vinyle souple et elles sont soudées à leur périphérie, à l'exception d'un bord longitudinal inférieur 4 et d'une partie 5 de leur bord latéral antérieur 6. La poche 1 possède de la sorte une ouverture 7 qui s'étend sur toute la longueur de son bord inférieur 4 et sur la partie 5 de son bord antérieur 6.

En bordure de l'ouverture 7, les feuilles 2 et 3 portent chacune un ruban adhésif continu 8. Ces rubans adhésifs sont situés sur la face des feuilles 2 et 3 qui est située à l'intérieur de la poche 1 et ils s'étendent sur toute la longueur du bord inférieur 4 et de la partie 5 du bord antérieur 6.

Quatre pattes souples 10 en polychlorure de vinyle sont fixées le long du bord antérieur 6 et du bord postérieur 9 des feuilles. Les pattes 10 portent chacune un ruban adhésif sur une face.

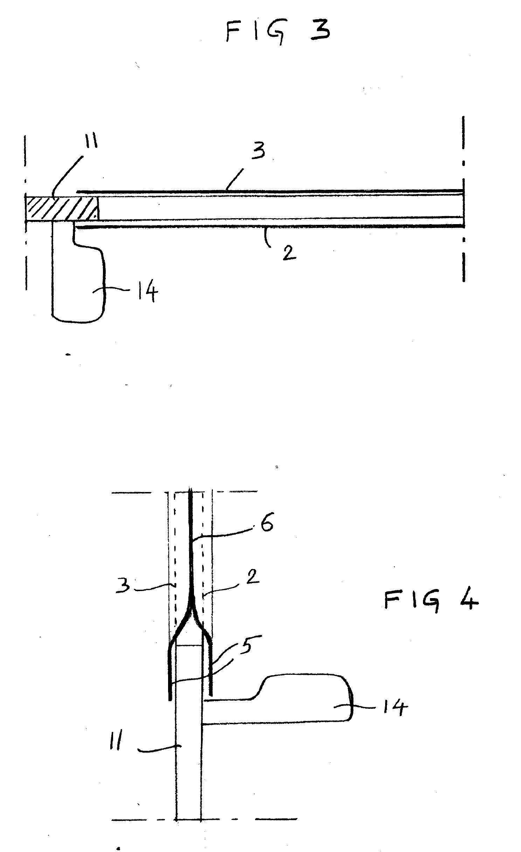

Les figures 2, 3 et 4 montrent la manière de positionner la poche 1 de la figure 1 sur une portière avant 11 d'une voiture automobile dont le vitrage a été détruit. La poche 1 est enfilée par le haut sur le cadre de la portière, jusqu'à ce que son bord supérieur 13 soit contre l'arceau supérieur arqué 12 du cadre de la portière 11. La feuille 2 est alors sur la face extérieure de la portière et la feuille 3 est sur la face intérieure de la portière. On prend soin de glisser la partie 5 du bord antérieur de la feuille extérieure 2 sous le rétroviseur latéral extérieur 14. On fixe ensuite la poche en appliquant les rubans adhésifs 4 sur la carrosserie de la portière. Le ruban adhésif 4 de la partie 5 de la feuille 1 est collé sur la carrosserie, derrière le rétroviseur 14. Par la suite, on rabat la partie supérieure de la poche 1 autour de l'arceau supérieur arqué 12 de la portière 11 et on la fixe au moyen des pattes 10.

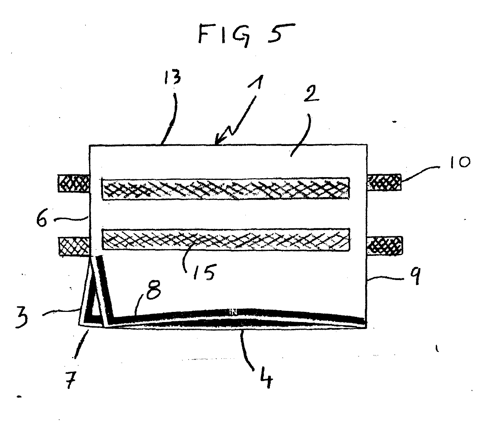

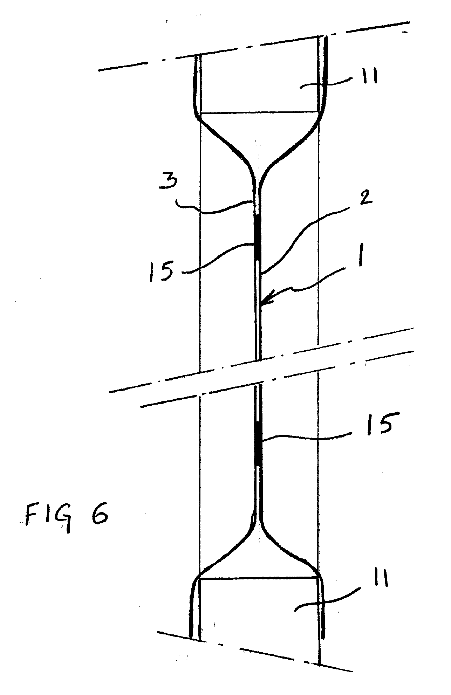

Dans sa variante représentée aux figures 5 et 6, l'une au moins des feuilles (par exemple la feuille 2) portent deux rubans adhésifs longitudinaux 15 sur sa face située à l'intérieure de l'enveloppe 1. Ces rubans adhésifs 15 servent à coller les deux feuilles 2 et 3 l'une sur l'autre, après que la poche 1 ait été enfilée sur le cadre de la portière 11, le vitrage brisé ayant été évacué auparavant. Dans cette application, les rubans adhésifs 15 sont orientés horizontalement.

Dans l'écran représenté aux figures 1 à 6, les rubans adhésifs 8, 10 et 15 sont recouverts, de manière bien connue en soi, d'un film protecteur siliconé. Ce film protecteur est arraché au moment de fixer la poche 1 sur la portière 11 de la voiture.

## Revendications

1. Ecran pour le remplacement temporaire d'un vitrage d'une portière d'un véhicule, ledit écran comprenant une enveloppe (1) pouvant être enfilée sur le cadre de la portière (11) et comprenant deux feuilles souples (2, 3) qui sont accolées et scellées à leur périphérie, le long de leurs bords respectifs antérieurs (6), postérieurs (9) et supérieurs (13), et qui délimitent une ouverture (7) le long de leurs bords respectifs inférieurs (4), **caractérisé en ce que** l'ouverture (7) susdite s'étend sur la totalité du bord inférieur (4) des feuilles (2, 3) et sur une partie (5) du bord antérieur (6) des feuilles.

2. Ecran selon la revendication 1, **caractérisé en ce que** la partie (5) susdite du bord antérieur (6) des feuilles (2, 3) a une longueur qui est au moins égale à la hauteur d'un rétroviseur latéral extérieur (14) d'un véhicule automobile.

3. Ecran selon la revendication 2, **caractérisé en ce que** le rapport entre la longueur de la partie susdite (5) du bord antérieur (6) des feuilles (2, 3) et la longueur totale dudit bord antérieur (6) est compris entre 0,15 et 0,80.

4. Ecran selon la revendication 3, **caractérisé en ce que** le rapport susdite est de 0,25 à 0,50.

5. Ecran selon l'une quelconque des revendications 1 à 4, **caractérisé en ce que** les feuilles (1, 2) sont munies d'éléments adhésifs (8) sur leur face située à l'intérieur de la poche, le long de l'ouverture susdite (7).

6. Ecran selon la revendication 5, **caractérisé en ce que** les éléments adhésifs (8) comprennent des rubans adhésifs continus.

7. Ecran selon la revendication 5 ou 6, **caractérisé en ce que**, le long du bord antérieur (6) et/ou du bord postérieur (9) des feuilles (2, 3), l'enveloppe est munie de pattes (10) portant des éléments adhésifs.

8. Ecran selon l'une quelconque des revendications 5 à 7, **caractérisé en ce que** l'enveloppe est munie d'un moyen auxiliaire de fixation temporaire des deux feuilles l'une à l'autre, ledit moyen (15) étant situé entre le bord supérieur (13) des feuilles (2, 3) et les éléments adhésifs (8) de leur bord inférieur (4).

9. Ecran selon la revendication 8, **caractérisé en ce que** le moyen auxiliaire de fixation (15) est localisé à une distance du bord inférieur (4) des feuilles (2, 3), comprise entre 15 et 85 % de l'écart entre ledit bord inférieur (4) et le bord supérieur (13) des feuilles.

10. Ecran selon la revendication 9, **caractérisé en ce que** la distance susdite est de 25 à 75 % dudit écart.

11. Ecran selon l'une quelconque des revendications 8 à 10, **caractérisé en ce que** le moyen auxiliaire de fixation (15) comprend un ruban adhésif longitudinal solidaire d'une des deux feuilles (2, 3).

12. Ecran selon l'une quelconque des revendications 6 à 11, **caractérisé en ce que** les rubans adhésifs (8, 15) et/ou les pattes (10) sont recouverts d'un film protecteur siliconé.

13. Ecran selon l'une quelconque des revendications 1 à 12, **caractérisé en ce que** les feuilles (2, 3) ont la forme d'un quadrilatère.

14. Ecran selon la revendication 13, **caractérisé en ce que** les feuilles (2, 3) sont rectangulaires.

15. Ecran selon l'une quelconque des revendications 2 à 14, **caractérisé en ce qu'**il est destiné à une voiture de tourisme dont une au moins des portières latérales (11) est équipée du rétroviseur extérieur (14) précité.
